# EUROPÄISCHE PATENTANMELDUNG

(11) **EP 0 000 911 A1**
(43) Veröffentlichungstag der Anmeldung: **07.03.1979**
(21) Anmeldenummer: 78100658.0
(22) Anmeldetag: 14.08.1978
(51) Int. Cl.: C07H 3/04, C07H 3/02, C07C 49/17, C07C 47/19, C07C 47/10, C07C 31/18, C08G 18/32, C08G 18/38, C07F 9/142

(54) **Verfahren zur Erniedrigung der Viskosität von Formose, die dabei erhaltenen Gemische sowie deren Verwendung zur Herstellung von gegebenenfalls zellförmigen Polyurethankunststoffen sowie zur Herstellung von Phosphorigsäureestern von Formose**

(30) Priorität: 26.08.1977 DE 2738513
(71) Anmelder: BAYER AG, 51368 Leverkusen (DE)
(72) Erfinder: Wagner, Kuno, Dr., D-5090 Leverkusen (DE)

(57) **Zusammenfassung**

Verfahren zur Erniedrigung der Viskosität von Formose bzw. Gemischen aus Formose und Mono- und/oder Disacchariden durch Zusatz eines viskositätserniedrigenden Mittels, dadurch gekennzeichnet, dass man als viskositätserniedrigendes Mittel Diaikylphosphite verwendet.

## Beschreibung

Die vorliegende Erfindung ist im weitesten Sinne auf ein Verfahren zur Viskositätserniedrigung von Formose(bzw. Gemischen aus Formose mit Mono- oder Disacchariden und/oder Aminoplastmonomeren und/oder Wasser)durch Zusatz von Dialkylphosphiten sowie gegebenenfalls Trialkylphosphiten und/oder α-Hydroxyphosphcnsäureestem gerichtet. Die Erfindung betrifft darüber hinaus bei Raumtemperatur flüssige, niedrigviskose, gegenüber Isocyanaten reaktive Gemische aus Formose, Dialkylphosphiten sowie gegebenenfalls Wasser und/oder Mono- oder Disacchariden und/oder Aminoplastmonomeren und/oder Trialkylphosphiten und/oder α-Hydroxyalkylphosphonsäureestern und/oder α rAminoalkylphosphonsäureestern sowie auch die Verwendung derartiger Reaktivganische zur Herstellung von Polyurethankunststoffen, insbesondere Schaumstoffen.

Unter "Formose" werden eriindungsgemlta die an sich bekannten Gemische von niedermolekularen Polyhydroxyl-Verbindungen (mehrwertigen Alkoholen, Hydroxyaldehyden und Hydroxyketonen) verstanden, welche bei der Kondensation von Formaldehydhydrat entstehen.

Die Herstellung von Gemischen mehrwertiger Alkohole, Hydröxyaldehyde und Hydroxyketone durch Selbstkondensation des Formaldehydhydrats wird in zahlreichen Literaturstellen beschrieben. Beispielsweise seien in diesem Zusammenhang Butlerow und Loew, Annalen 120, 295 (1861), bzw. J.pr.Chem. 33, 321 (1886), Pfeil, chemische Berichte 84, 229 (1951), Pfeil und Schroth, chemische Berichte 85, 303 (1952), R.D. Partridge und A.H. Weiss, Carbohydrate Research 24, 29-44 (1972), die Formosen aus Glycerinaldehyd bzw. Dioxyaceton nach Emil Fischer, die deutschen Patentschriften 822 385, 830 951 und 884 794, die US-Patentschriften 2 224 910, 2 269 935 und 2 272 378 sowie die englische Patentschrift 513 708 genannt. Diese bekannten Verfahren des Standes der Technik sind jedoch mit gewissen Nachteilen behaftet (toxikologisch bedenkliche Katalysatoren, schlechte Raum-Zeit-Ausbeuten, gefärbte Nebenprodukte! ; in jüngster Zeit wurden von der Anmelderin neue Verfahren entwickelt, nach denen sich in hoher Ausbeute mit gängigen Katalysatoren praktisch farblose und von störenden Nebenprodukten freie Formosen herstellen lassen.

Eines dieser neuen Verfahren besteht darin, daß man die Kondensation des Formaldehydhydrats in Gegenwart von löslichen oder unlöslichen Blei(II)-salzen, bzw. an hochmolekulare Träger gebundenen Blei(II)-Ionen als Katalysator und eines Gemisches aus Hydroxyaldehyden und Hydroxyketonen als Co-Katalysator ablaufen läßt, wie es bei der Kondensation von Formaldehydhydrat entsteht und welchen durch folgende Molverhältnisse charakterisiert ist:
Verbindungen mit 3 C-Atomen/Verbindungen mit 4 C-Atomen: 0,5 bis 2,0
Verbindungen mit 4 C-_{A}tomen/Verbindungen mit 5 C-Atomen: 0,2 bis 2,0
Verbindungen mit 5 C-Atomen/Verbindungen mit 6 C-Atomen: 0,5 bis 5,0

wobei der Anteil der Komponenten mit 3 bis 6 C-Atomen mindestens 75 Gew.-t, vorzugsweise mehr als 85 Gew.-%, bezogen auf gesamten Co-Katalysator, beträgt.

Die Reaktionstemperatur liegt dabei im allgemeinen zwischen 70 und 110°C, bevorzugt zwischen 80 und 100°C, und der pH-Wert der Reaktionslösung wird durch kontrollierte Zugabe einer anorganischen oder organischen Base bis zu einem Umsatz von 10-60 %, vorzugsweise 30-50 1, auf einen Wert von 6,0-8,0, bevorzugt 6,5-7,0 und anschließend auf einen Wert von 4,0-6,0, bevorzugt 5,0-6,0 eingestellt. Uberraschenderweise läßt sich die Produktverteilung der entsprechenden Polyol-, Hydroxyaldehyd- und Hydroxyketongemische durch diese spezielle pH-Führung und durch anschließende Kühlung bei verschieden hohen Restformaldehydgehalten (0 bis 10 Gew.-%, vorzugsweise 0,5 bis 6 Gew.-%) in reproduzierbarer Weise variieren.

Nachdem man die Selbstkondensation des Formaldehydhydrats durch Kühlen und/oder durch Desaktivierung des bleihaltigen Katalysators mittels Säuren unterbrochen hat, wird gegebenenfalls der Katalysator in an sich bekannter Weise entfernt und das in den Produkten enthaltene Wasser verdampft. Hinsichtlich näherer Einzelheiten sei auf die deutsche Offenlegungsschrift 2 639 084 verwiesen.

Eine weitere Möglichkeit, in hoher Raum-Zeit-Ausbeute hochkonzentrierte farblose Formosen herzustellen, besteht darin, wäßrige Formalinlösungen und/oder Paraformaldehyd-Dispersionen in Gegenwart eines löslichen oder unlöslichen Metallkatalysators und eines durch teilweise Oxidation eines zwei- oder mehrwertigen, mindestens zwei benachbarte Hydroxylgruppen aufweisenden Alkohols mit einem Molekulargewicht zwischen 62 und 242 bzw. eines Gemisches derartiger Alkohole dargestellten Co-Katalysators zu kondensieren, wobei man den pH-Wert der Reaktionslösung durch gesteuerte Zufuhr einer Base bis zu einem Umsatz von 5 bis 40 % zwischen 6,0 und 9,0 hält und anschließend bis zum Abbruch der Kondensationsreaktion auf 4,5 bis 8,0 einstellt, so daß er nun um 1,0 bis 2,0 Einheiten tiefer liegt als in der ersten Reaktionsphase, dann die Reaktion bei einem Restgehalt von 0-10 Gew.-% Formaldehyd durch Desaktivierung des Katalysators unterbricht und den Katalysator entfernt. Im Detail wird diese Arbeitsweise in der DOS 2 714 084 beschrieben.

Qualitativ hochwertige Formosen können auch durch Kondensation von Formaldehyd in Gegenwart eines Metallkatalysators und mehr als 10 Gew.-%, bezogen auf Formaldehyd, eines oder mehrerer zwei- oder mehrwertiger niedermolekularer Alkohole und/oder höhermolekularer Polyhydroxylverbindungen hergestellt werden. Derartige Formose-Polyolgemische sind Gegenstand von DOS 2 714 104.

Besonders wirtschaftlich ist es, Formose direkt, d.h. ohne den Umweg über wäßrige Formalinlösungen oder Paraformaldehyd, aus Formaldehyd enthaltenden Synthesegasen herzustellen. Man leitet zu diesem Zweck die Synthesegase, wie sie bei der großtechnischen Herstellung von Formaldehyd anfallen, bei Temperaturen zwischen 1₀ und ₁₅₀⁰C kontinuierlich oder diskontinuierlich in eine _{A}bsorptionsflüssigkeit, welche aus Wasser, ein- oder mehrwertigen niedermolekularen Alkoholen und/oder höhermolekularen Polyhydroxylverbindungen und/ oder zur Endiolbildung befähigten Verbindungen als Co-Katalysator und/oder löslichen oder unlöslichen Metallverbindungen, welche gegebenenfalls an hochmolekulare Träger gebunden sind, als Katalysator,besteht und einen pH-Wert von 3 bis 10 aufweist, kondensiert den Formaldehyd direkt in situ in der Absorptionsflüssigkeit (gegebenenfalls auch in einem nachgeschalteten Reaktionsrohr bzw. einer nachgeschalteten Rührkesselkaskade), bricht die Selbstkondensation des Formaldehyds bei einem Restformaldehydgehalt im Reaktionsgemisch von 0 bis 10 Gew.-% durch Kühlen und/oder durch Desaktivierung des Katalysators mittels Säuren ab und entfernt schließlich den Katalysator. Bezüglich näherer Einzelheiten dieses Verfahrens sei auf die deutsche Offenlegungsschrift 2 721 093 verwiesen.

Die so hergestellten Formosen können nachträglich auch durch überschüssigen Formaldehyd in ihre Halbacetale übergeführt oder durch Reaktion mit Formaldehyd in Gegenwart von Basen α-methyloliert wurden. Modifizierte Formosen dieser Art werden ebenfalls in der DOS 2 721 186 näher beschrieben.

Je nach der Reaktionsführung bei der Formaldehydkondensation lassen sich die Eigenschaften der Formose (mittlere Hydroxylfunktionalität; Verzweigungsgrad; Gehalt an reduzierenden Gruppen) in weiten Grenzen variieren. Im allgemeinen ist das mittlere Molekulargewicht und damit die Hydroxylfunktionalität der Formosen um so höher, je weiter die Kondensationsreaktion geführt wird, d.h. je weniger Restformaldehyd beim Abbruch der Kondensationsreaktion vorhanden ist. So wird etwa, wenn die Kondensationsreaktion bis zu einem Restformaldehydgehalt von 0 bis 1,5 Gew.-% geführt wird, eine Formose erhalten, welche ca. 25 Gew.-t an Anteilen mit 5 C-Atomen, 45 Gew.-% an Verbindungen mit 6 C-Atomen und ca. 20 Gew.-% an Verbindungen mit 7 und mehr C-Atomen enthält. Dagegen werden zusammen nur ca. 10 % an Polyolen, Hydroxyketonen und Hydroxyaldehyden mit 2,3 und 4 C-Atomen erhalten. Dies entspricht einer mittleren Hydroxylfunktionalität von ca. 5.

Durch Abbruch der Formaldehydselbstkondensation bei etwas höheren Restformaldehydgehalten werden, wie oben erläutert, andere Komponentenverteilungen der Startergemische erhalten. So ergibt sich bei einem Abbruch der Kondensationsreaktion bei 2 bis 2,5 % Formaldehydgehalt ein Gemisch mehrwertiger Alkohole, Hydroxyaldehyde und Hydroxyketone mit einer mittleren Hydroxylfunktionalität von ca. 4. Noch andere Komponentenverteilungen mit weiter erniedrigter durchschnittlicher Hydroxylfunktionalität werden erhalten, wenn man die Kondensationsreaktion bei Restformaldehydgehalten abbricht, die noch höher liegen als 2,5.

Durch Abmischen der Formose mit di- oder höherfunktionellen niedermolekularen Alkoholen läßt sich gegebenenfalls die Funktionalität der Produkte in gewünschter Weise weiter variieren, wenn bestimmte anwendungstechnische Effekte erreicht werden sollen. Als derartige niedermolekulare mehrwertige Alkohole (Molekulargewichte bis ca. 300) kommen beispielsweise Äthylenglykol, Propandiol-1,2, Propandiol-1,3, Butandiol-1,4, Diäthylenglykol, Dipropylenglykol, Triäthylenglykol, Tetraäthylenglykol, _{D}ibutylenglykol, Glycerin, Trimethylolpropan, Pentaerythrit, Sorbit, Butantriole und Hexantriole sowie Oxäthylierungsprodukte dieser Alkohole bzw. auch hydrierte Formose (Formit) in Frage. Auch die Verwendung von Aminen und/oder Äthanolaminen als Abmischkomponente ist möglich.

Beispiele hierfür sind _{M}ono-, _{D}i- und Triäthanolamin, Mono-, Di- und Triisopropanolamin, _{N}-Alkanolamine, wie N-Methyldi- äthanolamin und N-Äthyldiäthanolamin sowie niedere aliphatische Mono- und Polyamine, wie Äthylamin, Äthylendiamin, Diäthylentriamin und Triäthylentetramin.

Gemäß eigenen älteren Vorschlägen (siehe insbesondere die bereits oben erwähnten deutschen Offenlegungsschriften 26 39 084, 27 14 084 und 27 14 104) können Formosen als Polyol-Komponente im Polyisocyanat-Polyadditionsverfahren zur Herstellung von Polyurethan-Kunststoffen verwendet werden. Es wurde nun gefunden, daß sich auf diese Weise PolyurethanKunststoffe, insbesondere Schaumstoffe, mit außerordentlich hoher Flammwidrigkeit herstellen lassen, wenn als Ausgangskomponente anstelle der reinen Formose ein Gemisch aus Formose und Dialkylphosphiten eingesetzt wird. Derartige Gemische besitzen im Vergleich zu reiner Formose eine überraschend niedrige Viskosität, was anwendungstechnisch von großem Vorteil ist; weil sich die Gemische leicht dosieren lassen. Die Mischungen aus Formose und Dialkylphosphiten haben darüber hinaus überraschenderweise die Fähigkeit, große Mengen an kristallisierten Zuckern (Mono- und/oder Disacchariden) zu lösen. Zur weiteren Herabsetzung der Viskosität bzw. weiteren chemischen Modifizierung können den erfindungsgemäßen Gemischen auch zur Aminoplastbildung befähigte Verbindungen zugesetzt werden.

Gegenstand der Erfindung ist somit ein Verfahren zur Erniedrigung der Viskosität von Formosen durch Zusatz eines viskositätserniedrigenden Mittels, welches dadurch gekennzeichnet ist, daß man als viskositätserniedrigendes Mittel Dialkylphosphite, gegebenenfalls im Gemisch mit Trialkylphosphiten und/oder α-Hydroxyalkylphosphonsäureestern und/oder α-Aminoalkylphosphonsäureestern und/oder zur Aminoplastbildung befähigten Verbindungen,verwendet.

Gegenstand der Erfindung sind auch gegenüber Isocyanaten reaktive Mischungen aus
A) 3 bis 97 Gew.-%, vorzugsweise 10 bis 95 Gew.-%, besonders bevorzugt 30 bis 80 Gew.-%, bezogen auf die Summe der Komponenten A, B und C, an Formose sowie gegebenenfalls Mono- und/oder Disacchariden,
B) 3 bis 97 Gew.-%, bevorzugt 5 bis 90 Gew.-%, besonders bevorzugt 15 bis 60 Gew.-%, bezogen auf die Summe der Komponenten A, B und C, an Dialkylphosphiten sowie gegebenenfalls Trialkylphosphiten und/oder d-Hydroxyalkylphosphonsäureestern und/oder α-Aminoalkylphosphonsäureestern und
_{C}) 0 bis 10 Gew.-%, vorzugsweise 0,3 bis 6 Gew.-%, bezogen auf die Summe der Komponenten A, B und C, an Wasser.

Vorzugsweise liegen in den erfindungsgemäßen Gemischen pro Mol der Komponente A 0,2 bis 20 Mol, besonders bevorzugt 0,7 bis 5 Mol, der Komponente _{B} und O bis 3 Mol, besonders bevorzugt O bis 1,5 Mol, Wasser vor.

Die erfindungsgemäßen Gemische können darüber hinaus gegebenenfalls auch bis zu 100 _{G}ew.-Teile, bevorzugt 10 bis 50 Gew.-Teile, bezogen auf 100 Gew.-Teile des Gemisches aus A, B und C, an Aminoplastmonomeren enthalten. Vorzugsweise liegen in den erfindungsgemäßen Gemischen 0,5 bis 3 Mol an zur Aminoplastbildung befähigten Stoffen pro Mol der Komponente A vor.

Für die erfindungsgemäßen Mischungen kommen im Prinzip beliebige Formosen in Frage; für den erfindungsgemäß bevorzugten Anwendungszweck (Herstellung von Polyurethan-Kunststoffen) setzt man jedoch vorteilhafterweise die nach den oben beschriebenen neueren Verfahren der Anmelderin hergestellten Formosen ein, da diese im allgemeinen farblos und frei von störenden Nebenprodukten sind. Bevorzugt werden solche Formosen verwendet, welche ein mittleres Molekulargewicht zwischen 92 und 360, besonders bevorzugt zwischen 100 und 240, und einen Zuckergehalt (berechnet als Glukose vom Molekulargewicht 180) von 4 bis 85 Gew.-t, besonders bevorzugt 6-72 Gew.-%, aufweisen. Wegen ihres höheren Gehalts an primären Hydroxylgruppen sind darüber hinaus für manche Anwendungszwecke solche Formosen bevorzugt, welche, wie oben beschrieben, durch nachträgliche Behandlung mit Formaldehyd in basischen pH-Bereichen α-aldolisiert wurden. Selbstverständlich können erfindungsgemäß auch Formosen eingesetzt werden, welche nach ihrer Herstellung durch Reaktion mit Formaldehyd in Halbacetale übergeführt wurden, oder durch nachträgliche Behandlung mit Säuren inter- bzw. intramolekular acetalisierte oder ketalisierte Formosen oder auch durch Zusatz von Carbonyl-Verbindungen, welche keine Hydroxylgruppe am.4-ständigen Kohlenstoffatom aufweisen, oder durch Maillard-Reaktion, durch Acyloinkondensation in Gegenwart von Cyaniden oder durch Phenoplastbildner modifizierte Formosen eingesetzt werden. Alle diese modifizierten Formosen fallen ebenfalls unter den Begriff "Formose" im Sinne der vorliegenden Erfindung.

Wie schon erwähnt, sind überraschenderweise in den erfindungsgemäßen Gemischen relativ hohe Mengen an kristallisierten Mono- und Disacchariden wie beispielsweise Glucose, Maltose oder Rohrzucker löslich, ebenso natürliche Invertzucker (beispielsweise Bienenhonig) oder künstliche Invertzucker, z.B. Hydrolysate von Rohrzucker, aber auch Abbauprodukte von Mais- und Kartoffelstärke und von Pektinstoffen (Amylose und Amylopektine) oder Hydrolysate von beliebigen anderen Di- und/oder Polysacchariden, z.B. von Trehalose, Galactose, Raffinose, Cellulose und Dextrinen. Dies ist technisch von besonderem Interesse, weil derartige kristallisierte Mono- bzw. Disaccharide sich in reiner Form nur schwer mit Polyisocyanaten umsetzen lassen.

Alle diese Zucker können in der Komponente A in Anteilen bis zu 70 Gew.-%, vorzugsweise bis zu 50 Gew.-% (bezogen auf Komponente A) anwesend sein.

Als Komponente B in den erfindungsgemäßen Mischungen kommen bevorzugt Dialkylphosphite in Betracht, welche Alkylgruppen mit 1 bis 3 C-Atomen enthalten; besonders bevorzugt sind Dimethylphosphit und Diäthylphosphit. Daneben können auch Phosphite mit Benzyl-, Cycloalkyl- oder Alkylgruppen mit 4 bis 8 C-Atomen mitverwendet werden. Gegebenenfalls kann die Komponente B auch bis zu 80 _{G}ew.-%, vorzugsweise bis zu 50 Gew.-%, an entsprechenden Trialkylphosphiten und/ oder α-Hydroxyalkylphosphonsäureestern und/oder 4-Aminoalkylphosphonsäureestern enthalten.

α -Hydroxyalkylphosphonsäureester sind bekanntlich Additionsprodukte von Dialkylphosphiten an Aldehyde oder Ketone, z.B. gemäß nachstehendem Formelschema: 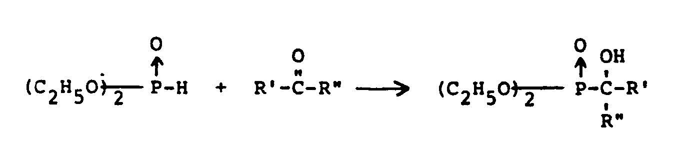 wobei
R' für Wasserstoff, eine Alkyl-, Cycloalkyl-, Aryl- oder Aralkylgruppe und
R" für eine Alkyl-, Cycloalkyl-, Aralkyl- oder Arylgruppe oder zusammen mit R' für einen alicyclischen Ring stehen.

Geeignete Aldehyde und Ketone sind beispielsweise solche mit 1 bis 15, besonders bevorzugt 1 bis 9, C-Atomen, z.B. Formaldehyd, Acetaldehyd, Propionaldehyd, Butyraldehyd, Isobutyraldehyd, Aceton, Methyläthylketon, Cyclopentanon, Cyclohexanon, Mesityloxid, Isophoron, Acetophenon sowie deren Methylolderivate, wie sie durch basenkatalysierte teilweise oder vollständige Aldolisierung mit Formaldehyd an den zur Carbanylgruppe α-ständigen C-Atomen erhältlich sind.

α-Aminoalkylphosphonsäureester entstehen bei der Addition von Dialkylphosphiten an Aldimine bzw. Ketimine der obengenannten Aldehyde bzw. Ketone mit Monoaminen oder vorzugsweise Polyaminen (insbesondere Diaminen wie Tetramethylendiamin, Pentamethylendiamin, Hexamethylendiamin und 1-Amino-3-aminomethyl-3,5,5-trimethylcyclohexan), z.B. gemäß folgendem Formelschema: 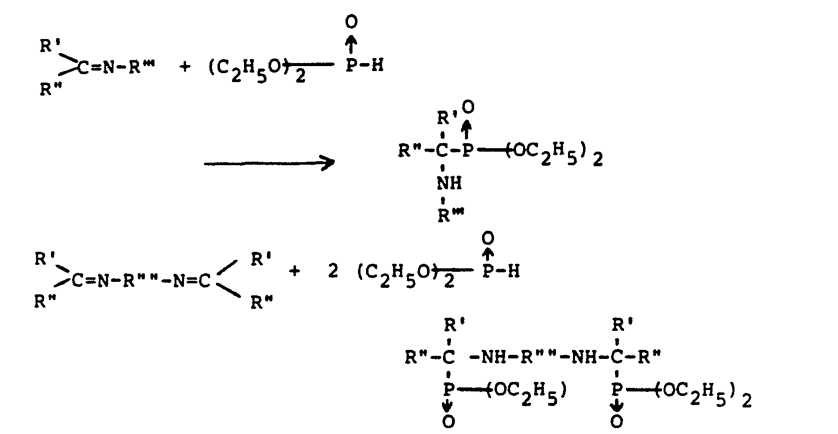 wobei
R und R' die oben angegebene Bedeutung haben,
R™ für einen einwertigen aliphatischen, cycloaliphatischen oder araliphatischen Rest
   mit 1 bis 15, vorzugsweise 2 bis 12, C-Atomen steht und
R"" einen zweiwertigen aliphatischen, cycloaliphatischen oder araliphatischen Rest mit 2 bis 15, vorzugsweise 2 bis 12, C-Atomen darstellt.

Die α-Hydroxyalkylphosphonsäureester bzw. x-Aminoalkylphosphonsäureester stellen ebenfalls gegenüber Isocyanaten reaktive Verbindungen dar, welche bei der Umsetzung der erfindungsgemäßen Gemische mit Polyisocyanaten in die entstehenden Polyurethankunststoffe eingebaut werden.

Wie schon erwähnt, können zwecks weiterer Modifizierung den erfindungsgemäßen Gemischen auch Aminoplastmonomere zugesetzt werden. Hierfür kommen alle an sich bekannten, zur Aminoplastbildung befähigten Stoffe in Frage, wie sie beispielsweise in den deutschen Offenlegungsschriften 2 324 134 und 2 713 198 beschrieben werden. Im allgemeinen ist es bevorzugt, die N-Methylolierungsprodukte dieser Verbindungen einzusetzen, da diese bei der Reaktion mit Polyisocyanaten leichter in die Polyurethankunststoffe eingebaut werden können.

Erfindungsgemäß bevorzugte Aminplast-Monomere sind Harnstoff, symmetrisch oder asymmetrisch substituierte Harnstoffe wie N, N-Dimethyl (bzw. -diäthyl oder -dibutyl)-Harnstoff, Thioharnstoff, Dicyandiamid, Melamin, Oxamid, Äthylenharnstoff, F-Caprolactam, Pyrrolidon-(2), Anilin, Acetylen-Diurein und die N-Methylolverbihdungen all dieser Monomeren. Besonders bevorzugt sind erfindungsgemäß Harnstoff, N-Monomethylolharnstoff, N , N-Dimethylolharnstoff, Thioharnstoff, N-Monomethylolthioharnstoff, N , N-Dimethylolthioharnstoff, ε-Caprolactam und N-Methylol-f-Caprolactam.

Bekanntlich lösen sich natürliche Zucker wie D-Glucose, D-Fructose, D-Galactose, Maltose, Lactose und Rohrzucker in polaren organischen Lösungsmitteln sowohl bei Raumtemperatur als auch beim Erwärmen auf ca. 100°C nur sehr wenig oder sind völlig unlöslich. Auch in Methanol oder Äthanol sind die meisten Mono- und Disaccharide wie Glucose, Galactose, Fructose und Lactose bei Raumtemperatur praktisch nicht löslich; Rohrzucker löst sich in Methanol oder Äthanol bei Raumtemperatur nach langen Lösezeiten nur zu knapp 1 Gew.-%. Diese geringe Löslichkeit von Mono- und Polysacchariden in anderen organischen Verbindungen ist maßgeblich dafür verantwortlich, daß diese Zucker bei der Mitverwendung in Polyurethanrezepturen im wesentlichen nur die Funktion eines Füllstoffes übernehmen und nur in minimalem Umfange in heterogener Reaktion an der Polyisocyanat-Polyadditionsreaktion teilnehmen. Es ist daher als äußerst überraschend anzusehen, daß sich erfindungsgemäß Formosen bzw. Gemische aus Formosen mit den verschiedenartigsten kristallinen Mono- und Disacchariden in beliebigen Mengenverhältnissen mit Dialkylphosphiten mischen lassen, wobei schon der Zusatz von sehr geringen Mengen an Dialkylphosphit eine merkliche Verminderung der Viskosität dieser Mischungen bewirkt. Der erfindungsgemäße Zusatz von Dialkylphosphiten sowie gegebenenfalls auch Aminoplastmonomeren zu Formose bzw. Formose/Mono- und/oder Disaccharid-Gemischen verbessert darüber hinaus auch deren Emulgierbarkeit bzw. Mischbarkeit mit den verschiedensten nieder- und höhermolekularen Polyhydroxylverbindungen, wie sie bei der Herstellung von Polyurethankunststoffen eingesetzt werden.

In den erfindungsgemäß mit Dialkylphosphit modifizierten Formosen bilden sich je nach dem Gehalt an Formaldehyd (welcher z.B. in Form von Halbacetalen mit den Hydroxylgruppen der Formose oder in N-Methylolgruppen der Aminoplastmonomeren gebunden vorliegt) und Temperaturlage Gleichgewichte aus zwischen freiem Dialkylphosphit, Hydroxymethanphosphonsäureestern der Konstitution 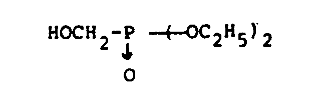 und α-Hydroxyphosphonsäureestern der Konstitutionen

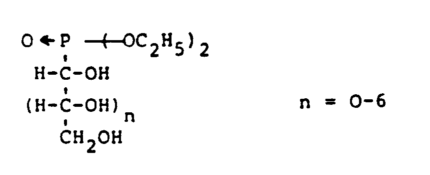

Bei höheren Temperaturen (oberhalb ca. 35°C) und insbesondere in Gegenwart von katalytischen Mengen an anorganischen Basen oder bevorzugt tertiären Aminen wie Triäthylamin oder Dimethylbenzylamin gehen diese Verbindungen bei vermindertem Druck überraschend schnell Lhüagerungsreaktionen und Umsterungsreakticnen unter ^{Alkoholabspal}tun^{g} ein und es entstehen cyclische Phosphite der Formose bzw. über intermolekulare Verknüpfung von Formosen höhermolekulare Polyphosphite bzw. Formose-Ester der Hydroxymethylphosphonsäure. Je nach abgespaltener Alkoholmenge lassen sich beliebige Umesterungsgrade erzielen und damit z.B. Viskositäten von ca. 300 mPas bei 20°C bis ca. 110 000 mPas bei 20°C einstellen.

Bevorzugt arbeitet man bei dieser nachträglichen chemischen Modifizierung der erfindungsgemäßen Gemische in einem Temperaturbereich von 20 bis 90⁰C, besonders bevorzugt von 25 bis 65°C,und bei Drucken von 0,1 bis 100 Torr, besonders bevorzugt von 0,3 bis 20 Torr. Die erwähnten Modifizierungsreaktionen werden in den Beispielen näher erläutert.

In die erfindungsgemäßeh Gemische können bis zu 150 Gew.-%, vorzugsweise 10 bis 100 Gew.-%, an Füllstoffen wie beispielsweise Aluminiumoxidhydrat eingerührt werden, wobei stabile, nicht sedimentierende, pastenartige Dispersionen entstehen. Diese Dispersionen eignen sich hervorragend für die Herstellung von füllstoffhaltigen Polyurethanschaumstoffen.

Die erfindungsgemäßen Gemische können auch als Flammschutzmittel für Kunststoffe und Textilien eingesetzt werden; sie stellen darüber hinaus auch Gefrierschutzmittel mit Antikorrosiver Wirkung dar.

Die erfindungsgemäßen Gemische können durch einfaches Vermischen der verschiedenen Ausgangskomponenten in beliebiger Reihenfolge hergestellt werden. Bevorzugt geht man dabei von einer gegebenenfalls Wasser enthaltenden Formose aus, mischt diese gegebenenfalls mit dem Aminoplastmonomeren und setzt anschließend die gegebenenfalls mitverwendeten α- aldolisierten Formosen, Mono- und/oder Disaccharide zu, entwässert die Mischungen auf einen Wassergehalt von 0,5 - 10 %, z.B. bei vermindertem Druck und 30 - 60°C,und vermischt mit dem Dialkylphosphit zu klaren Lösungen. Man kann auch nach dem Abbruch der Kondensationsreaktion in der Formoselösung noch vorhandenen Restformaldehyd, der halbacetalartig gebunden ist, bevorzugt nach der Entwässerung auf 0,5 bis 4 % Wasser, durch Zusatz des Dialkylphosphits unter Bildung der entsprechenden Hydroxymethylphosphonsäureester abfangen. Anschließend können die gegebenenfalls mitverwendeten weiteren Mischungskomponenten zugesetzt werden. Selbstverständlich ist es auch möglich, einzelne Zumischkomponenten (Aminoplastmonomer; Monosaccaride; Disaccharide; weitere Aldehyde und Ketone) schon während der Formosesynthese dem Reaktionagemisch zuzusetzen und die Dialkylphosphite, bevorzugt nach erfolgter Entwässerung der Gemische auf 0,5 - 10 % Wasser, anschließend zuzugeben. Den erfindungsgemäßen Gemischen können selbstverständlich die vorgenannten Aldehyde und Ketone, Mono- bzw. Polyaldimine oder -ketimine, aber auch Aldehyde und Ketone zusammen mit Mono- oder Polyaminen, nachträglich zugemischt werden, wobei in situ in der erfindungsgemäßen Mischung Hydroxyalkylphosphonsäureester oder Amino- bzw. Polyaminophosphonsäurealkylester hergestellt werden.

Wie schon mehrfach erwähnt, liegt der Hauptverwendungszweck der erfindungsgemäßen Gemische in der Herstellung von besonders flammfesten Polyurethan-Kunststoffen, insbesondere Polyurethan-Schaumstoffen.

Gegenstand der vorliegenden Erfindung ist somit auch ein Verfahren zur Herstellung von ggf. zellförmigen Polyurethan- Kunststoffen durch Umsetzung von
a) Polyisocyanaten mit
b) Polyhydroxylverbindungen mit einem Molekulargewicht unter 400, ggf.
c) Polyhydroxylverbindungen mit einem Molekulargewicht zwischen 400 und 10.000 sowie ggf. weiteren gegenüber Isocyanat reaktiven Verbindungen, ggf. in Gegenwart von
d) Treibmitteln, Katalysatoren, Füllstoffen und weiteren an sich bekannten Zusatzstoffen,

welches dadurch gekennzeichnet ist, daß als Kompomente b) die erfindungsgemäßen Gemische, welche gegebenenfalls durch die erwähnten Umesterungsreaktionen und Umlagerungsreaktionen modifiziert wurden, eingesetzt werden.

Da in den erfindungegemäßen Gemischen im allgemeinen mehr oder weniger große Mengen an Wasser enthalten sind (das Wasser läßt sich aus Formesegemischen nur unter größerem technischen Aufwand vollständig entfernen), eignen sich die erfindungsgemäßen Gemische insbesondere zur Herstellung von Polyurethan-Schaumstoffen. Je nach der verwendeten Rezeptur können dabei erfindungsgemäß sowohl offenzellige als auch geschlossenzellige Polyurethan-Hartschaumstoffe als auch offenzellige Weichschaumstoffe hergestellt werden.

Für die Herstellung offenzelliger Hartschaumstoffe wählt man zweckmäßigerweise Rezepturen aus, welche zwischen 4 und 25 Gewichtsprozent, besonders bevorzugt zwischen 8 und 20 %, Wasser enthalten. Gegebenenfalls können auch die oben beschriebenen Suspensionen von Aluminiumoxydhydrat bzw. anderen mineralischen Füllstoffen in den erfindungsgemäßen Gemischen eingesetzt werden. Gegebenenfalls kann man auch bis zu 100 Gew.-t, vorzugsweise 10 bis 50 Gew.-%, bezogen auf gesamte Polyolkomponente, einer höher molekularen Polyhydroxylverbindung (Molekulargewicht ca. 400-10.000) als elastifizierende Komponente mitverwenden. Die Menge des Polyisocyanates in der Rezeptur kann in weiten Grenzen schwanken; es ist möglich, sowohl einen Überschuß an Polyisocyanat (bis zu 120 der berechneten äquivalenten Menge) als auch eine weniger als äquivalente Menge an Polyisocyanat, berechnet auf die Summe der vorhandenen, gegenüber Isocyanaten reaktiven Komponenten, einsetzen. Es wurde jedoch gefunden, daß die Flammwidrigkeit der so erhaltenen Schaumstoffe umso höher liegt, je kleiner die Kennzahl der Rezeptur (Äquivalentverhältnis von Polyisocyanaten und gegenüber Isocyanaten reaktiven Verbindungen) ist. Vorzugsweise arbeitet man daher im Kennzahlbereich zwischen 20 und 70, besonders bevorzugt zwischen 30 und 60, insbesondere zwischen 35 und 55.

Für die Herstellung von geschlossenzelligen Hartschaumstoffen wählt man vorzugsweise solche erfindungegemäßen Gemische aus, welche 0 bis 4 t, besonders bevorzugt 0,7 bis 3 Gew.-t, an Wasser enthalten. Die Verschäumung wird in diesem Falle durch den Zusatz von niedrig siedenden Flüssigkeiten wie z.B. Fluortrichlormethan, bewirkt. Bezüglich der Kennzahl der Rezepturen gilt dasselbe, was bereits bei den offenzelligen Hartschaumstoffen ausgeführt wurde.

Die erfindungsgemäßen Mischungen können jedoch auch in Anteilen von 5 bis 3₀ Gew,-%, bevorzugt 5 bis 20 Gew.-%, bezogen auf gesamte Polyolkomponente, als Vernetzer bei der Herstellung von offenzelligen Weichschaumstoffen mitverwendet werden. Der Rest der Polyol-Komponente besteht in diesem Fall aus Polyhydroxylverbindungen mit einem Molekulargewicht von 400 bis 10.000, vorzugsweise aus Polyäther-Polyolen.

Für die Herstellung der ggf. zellförmigen Polyurethankunststoffe kommen als Isocyanat-Komponente aliphatische, cycloaliphatische, araliphatische, aromatische und heterocyclische Polyisocyanate in Betracht, wie sie z.B. von W. Siefken in Justus Liebigs Annalen der Chemie, 562, Seiten 75 bis 136, beschrieben werden, beispielsweise Äthylen-diisocyanat, 1,4-Tetramethylendiisocyanat, 1,6-Hexamethylendiisocyanat, 1,12-Dodecandiisocyanat, Cyclobutan-1,3-diisocyanat, Cyclohexan-1,3- und -1,4-diisocyanat sowie beliebige Gemische dieser Isomeren, 1-Isocyanato-3,3,5-trimethyl-5-isocyanatomethyl-cyclohexan (DAS 1 202 785, amerikanische Patentschrift 3 401 190), 2,4- und 2,6-Hexahydrotoluylendiisocyanat sowie beliebige Gemische dieser Isomeren, Hexahydro-1,3- und/oder -1,4-phenylen-diisocyanat, Perhydro-2,4'-und/oder -4,4'-diphenylmethan-diisocyanat, 1,3- und 1,4-Phenylendiisocyanat, 2,4- und 2,6-Toluylendiisocyanat sowie beliebige Gemische dieser Isomeren, Diphenylmethan-2,4'- und/oder -4,4'-diisocyanat, Naphthylen-1,5-diisocyanat, Triphenylmethan-4,4',4"-triisocyanat, Polyphenylpolymethylen-polyisocyanate, wie sie durch Anilin-Formaldehyd-Kondensation und anschließende Phoagenierung erhalten und z.B. in den britischen Patentschriften 874 430 und 848 671 beschrieben werden, m- und p-Isocyanatophenylsulfonyl-isocyanate gemäß der amerikanischen Patentschrift 3 454 606, perchlorierte Arylpolyisocyanate, wie sie z.B. in der deutschen Auslegeschrift 1 157 60" (amerikanische Patentschrift 3 277 138) beschrieben werden, Carbodiimidgruppen aufweisende Polyisocyanate, wie sie in der deutschen Patentschrift 1 092 007 (amerikanische Patentschrift 3 152 162) beschrieben werden, Diisocyanate, wie sie in der amerikanischen Patentschrift 3 492 330 beschrieben werden, Allophanatgruppen aufweisende Polyisocyanate, wie sie z.B. in der britischen Patentschrift 994 89₀, der belgischen Patentschrift 761 626 und der veröffentlichten holländischen Patentanmeldung 7 102 524 beschrieben werden, Isocyanuratgruppen aufweisende Polyisocyanate, wie sie z.B. in der amerikanischen Patentschrift 3 001 973, in den deutschen Patentschriften 1 022 789, 1 222 067 und 1 027 394 sowie in den deutschen Offenlegungsschriften 1 929 034 und 2 004 048 beschrieben werden, Urethangruppen aufweisende Polyisocyanate, wie sie z.B. in der belgischen Patentschrift 752 261 oder in der amerikanischen Patentschrift 3 394 164 beschrieben werden, acylierte Harnstoffgruppen aufweisende Polyisocyanate gemäß der deutschen Patentschrift 1 230 778, Biuretgruppen aufweisende Polyisocyanate, wie sie z.B. in der deutschen Patentschrift 1 101 394 (amerikanische Patentschriften 3 124 605 und 3 201 372) sowie in der britischen Patentschrift 889 050 beschrieben werden, durch Telomerisationsreaktionen hergestellte Polyisocyanate, wie sie z.B. in der amerikanischen Patentschrift 3 654 106 beschrieben werden, Estergruppen aufweisende Polyisocyanate, wie sie z.B. in den britischen Patentschriften 965 474 und 1 072 956, in der amerikanischen Patentschrift 3 567 763 und in der deutschen Patentschrift 1 231 688 genannt werden, Umsetzungsprodukte der obengenannten Isocyanate mit Acetalen gemäß der deutschen Patentschrift 1 072 385 und polymere Fettsäurereste enthaltende Polyisocyanate gemäß der amerikanischen Patentschrift 3 455 883.

Es ist auch möglich, die bei der technischen Isocyanatherstellung anfallenden, Isocyanatgruppen aufweisenden Destillationsrückstände, gegebenenfalls gelöst in einem oder mehreren der vorgenannnten Polyisocyanate, einzusetzen. Ferner ist es möglich, beliebige Mischungen der vorgenannten Polyisocyanate zu verwenden.

Besonders bevorzugt werden in der Regel die technisch leicht zuganglichen Polyisocyanate, z.B. das 2,4- und 2,6-Toluylendiisocyanat sowie beliebige Gemische dieser Isomeren ("TDI"), PolyphenyJ-polymethylen-polylsocyanate, wie sie durch Anilin-Formaldehsd-Kondensation und anschließende Phosgenierung hergestellt werden ("rohes MDI") und Carbodiimidgruppen, Urethangruppen, Allophanatgruppen, Isocyanuratgruppen, Harnstoffgruppen der Biuretgruppen aufweisenden Polyisocyanate ("modifizierte Polyisocyanate").

Geeignete höhermolekulare Polyhydroxylverbindungen, speziell solche vom Molekulargewicht 800 bis 10 000, vorzugsweise 1000 bis 6000, sind z.B. mindestens zwei, in der Regel 2 bis 8, vorzugsweise aber 2 bis 4, Hydroxylgruppen aufweisende Polyester, Polyäther, Polythioäther, Polyacetale, Polycarbonate und Polyesteramide, wie sie für die Herstellung von homogenen und von zellförmigen Polyurethanen an sich bekannt sind.

Die in Frage kommenden Hydroxylgruppen aufweisenden Polyester sind z.B. Umsetzungsprodukte von mehrwertigen, vorzugsweise zweiwertigen und gegebenenfalls zusätzlich dreiwertigen Alkoholen mit mehrwertigen, vorzugsweise zweiwertigen, Carbonsäuren. Anstelle der freien Polycarbonsäuren können auch die entsprechenden Polycarbonsäureanhydride oder entsprechende Polycarbonsäureester von niedrigen Alkoholen oder deren Gemische zur Herstellung der Polyester verwendet werden. Die Polycarbonsäuren können aliphatischer, cycloaliphatischer, aromatischer und/oder heterocyclischer Natur sein und gegebenenfalls, z.B. durch Halogenatome, substituiert und/oder ungesättigt sein.

Als Beispiele hierfür seien genannt: Bernsteinsäure, Adipinsäure, Korksäure, Azelainsäure, Sebacinsäure, Phthalsäure, Isophthalsäure, Trimellitsäure, Phthalsäurcanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäure, Maleinsäureanhydrid, Fumarsäure, dimere und trimere Fettsäuren wie ölsäure, gegebenenfalls in Mischung mit monomeren Fettsäuren, Terephthalsäuredimethylester und Terephthalsäure-bis-glykolester. Als mehrwertige Alkohole kommen z.B. Äthylenglykol, Propylenglykol-(1,2) und -(1,3), Butylenglykol-(1,4) und -(2,3), Hexandiol-(1,6), Octandiol-(1,8), Neopentylglykol, Cyclohexandimethanol(1,4-Bis-hydroxymethylcyclo- hexan), 2-Methyl-1,3-propandiol, Glycerin, Trimethylolpropan, Hexantriol-(1,2,6), Butantriol-(1,2,4), Trimethyloläthan, Pentaerythrit, Chinit, Mannit und Sorbit, Methylglykosid, ferner Diäthylenglykol, Triäthylenglykol, _{T}etraäthylenglykol, Polyäthylenglykole, Dipropylenglykol, Polypropylenglykole, Dibutylenglykol und Polybutylenglykole in Frage. Die Polyester können anteilig endständige Carboxylgruppen aufweisen. Auch Polyester aus Lactonen, z.B. E-Caprolacton oder Hydroxycarbonsäuren, _{z}._{B}. ω-Hydroxycapronsäure, sind einsetzbar.

Auch die erfindungsgemäß in Frage kommenden, mindestens zwei, in der Regel zwei bis acht, vorzugsweise zwei bis drei, Hydroxylgruppen aufweisenden Polyäther sind solche der an sich bekannten Art und werden z.B, durch _{P}oly- merisation von Epoxiden wie Äthylenoxid, Propylenoxid, Butylenoxid, Tetrahydrofuran, Styroloxid oder Epichlorhydrin mit sich selbst, z.B. in Gegenwart von BF₃, oder durch Anlagerung dieser Epoxide, gegebenenfalls im Gemisch oder nacheinander, an Startkomponenten mit reaktionsfähigen Wasserstoffatomen wie Wasser, Alkohole, Ammoniak oder Amine, z.B. Äthylenglykol, Propylenglykol-(1,3) oder -(1,2), Trimethylolpropan, 4,4'-Dihydroxy-diphenylpropan, Anilin, Äthanolamin oder Äthylendiamin hergestellt. Auch Sucrosepolyäther, wie sie z.B. in den deutschen Auslegeschriften 1 176 358 und 1 064 938 beschrieben werden, kommen erfindungsgemäß in Frage. Vielfach sind solche Polyäther bevorzugt, die überwiegend (bis zu 90 Gew.-%, bezogen auf alle vorhandenen OH-Gruppen im Polyäther) primäre OH-Gruppen aufweisen. Auch durch Vinylpolymerisate modifizierte Polyäther, wie sie z.B. durch Polymerisation von Styrol und Acrylnitril in Gegenwart von Polyäthern entstehen (amerikanische Patentschriften 3 383 351, 3 304 273, 3 523 093, 3 110 695, deutsche Patentschrift 1 152 536), sind geeignet, ebenso OH-Gruppen aufweisende Polybutadiene.

Unter den Polythioäthern seien insbesondere die Kondensationsprodukte von Thiodiglykol mit sich selbst und/ oder mit anderen Glykolen, Dicarbonaäuren, Formaldehyd, Aminocarbonsäuren oder Aminoalkoholen angeführt. Je nach den Co-Komponenten handelt es eich bei den Produkten um Polythiomißchäther, Polythioätherenter oder Polythioätherenteramide.

Als Polyacetale kommen z.B. die aus Glykolen, wie Diäthylenglykol, Triäthylenglykol, 4,4'-Dioxäthoxydiphenyldimethylmethan, Hexandiol und Formaldehyd herstellbaren Verbindungen in Frage. Auch durch Polymerisation cyclischer Acetale lassen sich erfindungsgemäß geeignete Polyacetale herstellen.

Als Hydroxylgruppen aufweisende Polycarbonate kommen solche der an sich bekannten Art in Betracht, die z.B. durch Umsetzung von Diolen wie Propandiol-(1,3), Butandiol-(1,4) und/oder Hexandiol-(1,6), Diäthylenglykol, Triäthylenglykol oder Tetraäthylenglykol mit Diarylcarbonaten, z.B. Diphenylcarbonat,oder Phosgen hergestellt werden können.

Zu den Polyesteramiden und Polyamiden zählen z.B. die aus mehrwertigen gesättigten und ungesättigten Carbonsäuren bzw. deren Anhydriden und mehrwertigen gesättigten und ungesättigten Aminoalkoholen, Diaminen, Polyaminen und ihren Mischungen gewonnenen, vorwiegend linearen Kondensate.

Auch bereits Urethan- oder Harnstoffgruppen enthaltende Polyhydroxylverbindungen sowie gegebenenfalls modifizierte natürliche Polyole, wie Rizinusöl, Kohlenhydrate oder Stärke, sind verwendbar. Auch Anlagerungsprodukte von Alkylenoxiden an Phenol-Formaldehyd-Harse oder auch an Harnstoff-Formaldahydharze sind erfindungagwaß einsetzbar.

Vertreter dieser erfindungsgemäß zu verwendenden Verbindungen sind z.B. in High Polymers, Vol. XVI, "Polyurethanes, Chemistry and Technology", verfaßt von Saunders-Frisch, Interscience Publishers, New York, London, Band I, 1962, Seiten 32-42 und Seiten 44-54 und Band II, 1964, Seiten 5-6 und 198-199, sowie im Kunststoff-Handbuch, Band VII, Vieweg-Höchtlen, Carl-Hanser-Verlag, München, 1966, z.B. auf den Seiten 45-71, beschrieben.

Selbstverständlich können Mischungen der obengenannten Verbindungen mit mindestens zwei gegenüber Isocyanaten reaktionsfähigen Wasserstoffatomen mit einem Molekulargewicht von 400 - 10 000, z.B. Mischungen von Polyäthern und Polyestern, eingesetzt werden.

Als erfindungsgemäß gegebenenfalls einzusetzende Ausgangskomponenten kommen auch Verbindungen mit mindestens zwei gegenüber Isocyanaten reaktionsfähigen Wasserstoffatomen von einem Molekulargewicht 32-400 in Frage. Auch in diesem Fall versteht man hierunter Hydroxylgruppen und/oder Aminogruppen und/oder Thiolgruppen und/oder Carboxylgruppen aufweisende Verbindungen, vorzugsweise Hydroxylgruppen und/oder Aminogruppen aufweisende Verbindungen, die als Kettenverlängerungsmittel oder Vernetzungsmittel dienen. Diese Verbindungen weisen in der Regel 2 bis 8 gegenüber Isocyanaten reaktionsfähige Wasserstoffatome auf, vorzugsweise 2 oder 3 reaktionsfähige Wasserstoffatome.

Als Beispiele für derartige Verbindungen seien genannt: Äthylenglykol, Propylenglykol-(1,2) und -(1,3), Butylenglykol-(1,4) und -(2,3), Pentandiol-(1,5), Hexandiol-(1,6), Octandiol-(1,8), Neopentylglykol, 1,4-Bishydroxymethyl-cyclohexan, 2-Methyl-1,3-propandiol, Glyzerin, Trimethylolpropan, Hexantriol-(1,2,6), Trimethyloläthan, Pentaerythrit, Chinit, Mannit und Sorbit, Diäthylenglykol, Triäthylenglykol, Tetraäthylenglykol, Polyäthylenglykole mit einem Molekulargewicht bis 400, Dipropylenglykol, Polypropylenglykole mit einem Molekulargewicht bis 400, Dibutylenglykol, Polybutylenglykole mit einem Molekulargewicht bis 400, 4,4'-Dihydroxydiphenylpropan, Di-hydroxymethyl-hydrochinon, Äthanolamin, Diäthanolamin, Triäthanolamin, 3-Aminopropanol, Äthylendiamin, 1,3-Diaminopropan, 1-Mercapto-3-amino- propan, 4-Hydroxy- oder -Amino-phthalsäure, Bernsteinsäure, Adipinsäure, Hydrazin, N,N'-Dimethylhydrazin, 4,4'-Diaminodiphenylmethan, Toluylendiamin, Methylen-bis-chloranilin, Methylen-bis-anthranilsäureester Diaminobenzoesäureester und die isomeren Chlorphenylendiamine.

Auch in diesem Fall können Mischungen von verschiedenen Verbindungen mit mindestens zwei gegenüber Isocyanaten reaktionsfähigen Wasserstoffatomen mit einem Molekulargewicht von 32-400 verwendet werden.

Erfindungsgemäß können jedoch auch Polyhydroxylverbindungen eingesetzt werden, in welchen hochmolekulare Polyaddukte bzw. Polykondensate in feindiaperser oder gelöster Form enthalten sind. Derartige modifizierte Polyhydroxylverbindungen werden erhalten, wenn man Polyadditionsreaktionen (z.B. Umsetzungen zwischen Polyisocyanaten und aminofunktionellen Verbindungen) bzw. Polykondensationsreaktionen (z.B. zwischen Formaldehyd und Phenolen und/oder Aminen) direkt in situ in den oben genannten, Hydroxylgruppen aufweisenden Verbindungen ablaufen läßt. Derartige Verfahren sind beispielsweise in den Deutschen Auslegeschriften 1 168 075 und 1 260 142, sowie den Deutschen Offenlegungsschriften 2 324 134, 2 423 984, 2 512 385, 2 513 815, 2 550 796, 2 550 797, 2 550 833 und 2 550 862 beschrieben. Es ist aber auch möglich, gemäß US-Patent 3 869 413 bzw. Deutscher Offenlegungsschrift 2 550 860 eine fertige wäßrige Polymerdispersion mit einer Polyhydroxylverbindung zu vermischen und anschließend aus dem Gemisch das Wasser zu entfernen.

Bei der Verwendung von modifizierten Polyhydroxylverbindungen der oben genannten Art als Ausgangskomponente im Polyisocyanat-Polyadditionsverfahren entstehen in vielen Fällen Polyurethankunststoffe mit wesentlich verbesserten mechanischen Eigenschaften.

Die ausschließliche Umsetzung von wasserfreien erfindungsgemäßen Gemischen (ohne Mitverwendung anderer gegenüber Isocyanaten reaktiver Komponenten) mit stark elastifizierenden Polyisocyanaten, wie z.B. Polyisocyanaten mit Biuretstruktur (DAS 1 543 178) führt zu harten, kratz- und lösungsmittelfesten Beschichtungen und Lacken.

Ein Vorteil der erfindungsgemäßen Mischungen bei der Umsetzung mit Polyisocyanaten liegt auch darin, daß alle Mischungskomponenten an der Polyisocyanat-Polyadditionsreaktion teilnehmen und in das Polyurethan eingebaut werden, so daß keine Lösungsmittel an die Umwelt abgegeben werden. Uberschüssiges, nicht verestertes Dialkylphosphit reagiert ebenfalls mit Polyisocyanaten, z.B. gemäß nachstehendem Formelschema 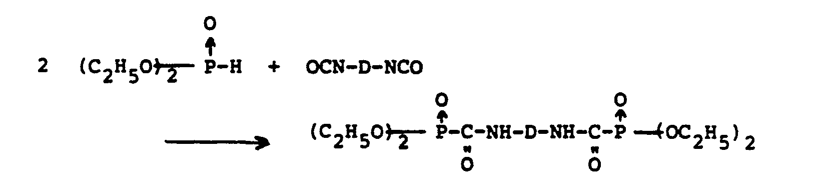 in welchem
D für einen zweiwertigen Rest steht, wie er durch Entfernung der beiden Isocyanatgruppen aus einem Diisocyanat entsteht.

Durch den auf diese Weise bzw. durch Reaktion von Polyisocyanaten mit α-Hydroxyalkylphosphonsäureestern bzw. α-Aminoalkylphosphonsäureestern in das Polyurethan eingebauten Phosphor wird die Flammwidrigkeit der erhaltenen Kunststoffe wesentlich erhöht. Eine weitere Verbesserung der Flammwidrigkeit wird durch die zusätzliche Mitverwendung von Aminoplastmonomeren in den erfindungsgemäßen Gemischen erzielt.

Die folgenden Beispiele erläutern die vorliegende Erfindung. Wenn nicht anders vermerkt, sind Mengenangaben als Gewichtsteile bzw. Gewichtsprozente zu verstehen.

### Beispiel 1

Die in diesem Beispiel verwendete Formose wurde gemäß Beispiel 1 von DOS 2 639 084 hergestellt. Die Formose hat eine mittlere OH-Funktionalität von 4,68, ein mittleres Molekulargewicht von 166 und bei einem Wassergehalt von 5,6 % eine Viskosität von 24 500 mPas/50°C. Bei 25°C ist die Viskosität nicht mehr meßbar; sie liegt über 550 000 mPas.
a) Man mischt bei 45°C 175,9 g der 5,6 % Wasser enthaltenden Formose (1 Mol Formose) mit 138 g Diäthylphosphit (1 Mol) und erhält eine klare, gelblich gefärbte Lösung mit einer Viskosität von nur 273 mPas bei 25°C und einem Wassergehalt von ca. 3,1 %.
b) Man mischt bei 45°C 179,9 g der Formose mit 110 g Dimethylphosphit (1 Mol) und erhält eine Lösung mit einer Viskosität von lediglich 174 mPas bei 25°C und einem Wassergehalt von ca. 3,4 %.

Beide Mischungen a) und b) neigen auch bei 0°C nicht zur Sedimentation von höhermolekularen Zuckern.

Bei Raumtemperatur und pH 7 sind die erfindungsgemäßen Gemische a) und b) lagerstabil, wie die konstant bleibende Viskosität zeigt. Unter dem Einfluß katalytischer Mengen an Säuren oder Basen (z.B. Triäthylamin, Dimethylbenzylamin oder Endoäthylenpiperazin) addiert sich das Dimethylphosphit bzw. Diäthylphosphit an die Carbonylgruppen der Formose unter Bildung der entsprechenden α-Hydroxyphosphonsäureester und es treten Umesterungsreaktionen unter Abspaltung von Methyl- bzw. Äthylalkohol ein, durch welche Phosphite der Zucker gebildet werden. Die Umesterungsreaktionen lassen sich durch Anlegen eines Vakuums und Erwärmen (z.B. 14 Torr und 55°C) quantitativ zu Ende führen.

Da die primären Hydroxylgruppen leichter umestern als die sekundären, erhält man schließlich im wesentlichen Produkte der idealisierten Formel 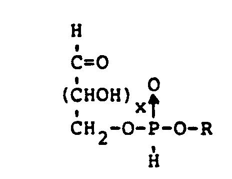 in welcher
X für eine ganze Zahl von 0 bis 6 und
R für Methyl bzw. Äthyl stehen.

Die Viskosität dieser Monoester beträgt bei 25°C 34 000 mPas. Unter energischeren Umesterungsbedingungen spalten diese Phosphitester weitere Mengen an Alkoholen ab und gehen in hochviskose, gelartige, teilweise vernetzte Zuckerpolyphosphite, z.B. solche der idealisierten Formel 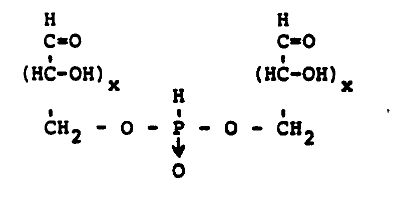 über. Infolge von Dehydratisierungsreaktionen der freien Hydroxylgruppen der Zucker werden im Verlaufe steigender Umesterungsgrade cognakfarbene bis braune Endprodukte erhalten.

### Beispiel 2

Dieses Beispiel zeigt, daß durch ein erhöhtes Angebot an Dialkylphosphit nahezu wasserdünne Lösungen erhalten werden können, die gewünschtenfalls später zu einem beliebigen Zeitpunkt in Formose-Phosphit-Ester mit definiertem Veresterungsgrad umgewandelt werden können.

Man mischt bei 45°C 175,9 g der in Beispiel 1 verwendeten Formose mit einem Wassergehalt von 5,6 % mit 484 g Dimethylphosphit (4,4 Mol). Die erhaltene klare, leicht gelblich gefärbte Lösung besitzt bei 25°C die überraschend niedrige Viskosität von lediglich 9 mPas.

Zu einem beliebigen Zeitpunkt können aus dieser reaktiven Lösung bei 60°C und 18 Torr im Verlaufe von 10 Stunden 100,8 g Methanol (3,15 Mol) und 11 g Dimethylphosphit abdestilliert werden. Im Mittel sind dann von 4,68 veresterbaren OH-Äquivalenten der eingesetzten Formose 3,15 OH- Äquivalente verestert worden. Hierbei steigt die Viskosität der Lösung (wegen des hohen Umesterungsgrades) wesentlich weniger als in Beispiel 1 an, nämlich nur auf 131 mPas/ 25°C.

Durch Anwendung von 5 bis 8 Mol Dimethylphosphit oder Diäthylphosphit pro Mol der Formose kann man die vorliegenden Hydroxylgruppen nahezu quantitativ verestern, wobei im wesentlichen asymmetrische Formose-Phosphit-Ester, z.B.

solche der idealisierten Konstitution 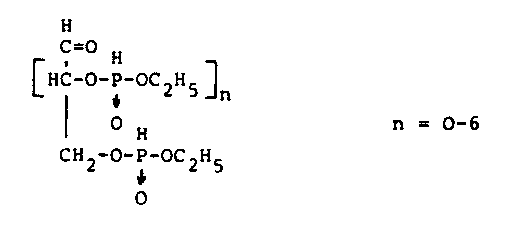 erhalten werden. Bei diesem maximalen Veresterungsgrad und den erforderlichen langen Kondensationszeiten von 11 bis 18 Stunden verfärben sich auch hierbei infolge von Dehydratisierungsreaktionen der freien Hydroxylgruppen der Zucker die Endprodukte über cognakfarbene zu braunen niederviskosen Lösungen.

### Beispiel 3

Dieses Beispiel zeigt, daß auch α-aldolisierte Formose mit Diäthylphosphit oder Dimethylphosphit sehr niedrigviskose Mischungen ergibt.

### a) Herstellung der α-aldolisierten Formose:

500 g einer vollentsalzten, 50 Gew.-% Formose enthaltenden wäßrigen Lösung, die gemäß Beispiel 1 der DOS 2 639 084 hergestellt wurde (250 g Formose-Feststoff; mittleres Molekulargewicht ca. 168; ca. 1,49 Mol) werden mit 149 g einer 30 %igen Formalinlösung (ca. 1,49 Mol) und 10 g Triäthylamin vermischt. Man heizt unter Rühren auf 85°C auf und verfolgt die Formaldehydabnahme durch Titration mit Natriumsulfit. Bereits nach 45 Minuten ist der Formaldehydgehalt in der Lösung von 6,3 % auf O,5 % abgesunken und die α-Aldolisierung beendet. Man klärt die heiße Lösung durch Zugabe von 8 g Aktivkohle, filtriert und erhält eine leicht gelbstichig gefärbte Lösung, in der vorwiegend α-methylolierte Formosen der nachstehenden idealisierten Konstitutionen vorliegen:

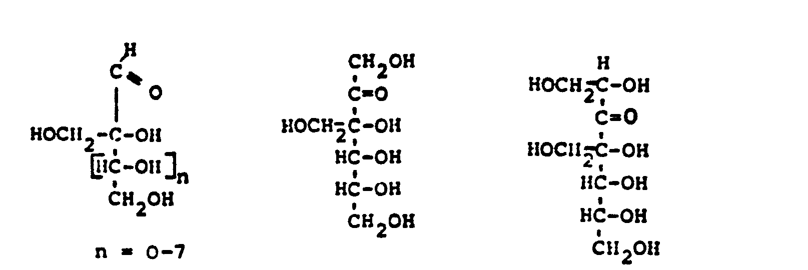

Durch die gezielte α-Aldolisierung werden Formosen erhalten, die pro Molekül im Mittel mindestens zwei primäre Hydroxylgruppen enthalten und daher gegenüber _{P}oly- isocyanaten eine höhere Reaktivität aufweisen als die Ausgangsformosen.

Überraschenderweise ist bei dieser Arbeitsweise die α - Aldolisierung gegenüber möglichen gekreuzten Cannizzaro-Reaktionen stark bevorzugt: Wie aus der analytisch ermittelten Menge an Formiationen geschlossen werden kann, gehen lediglich etwa 3 g des eingesetzten Formaldehyds (ca. 7 % der Gesamtmenge) gekreuzte Cannizzaro-Reaktionen ein.

Die Viskosität der so hergestellten aldolisierten Formose, die im Rotationsverdampfer auf einen Wassergehalt von 5,2 eingeengt wurde, ist weder bei 25°C noch bei 35°C meßbar und liegt über 570 000 mPas. Bei 50°C beträgt die Viskosität der Formose 25 736 mPas. Das mittlere Molekulargewicht dieser α-aldolisierten Formose beträgt ca. 198.

Mischt man bei 50°C 198 a der α-aldolisierten Formose (1 Mol Formosefeststoff) mit 138 g Diäthylphosphit (1 Mol), so wird eine klare, gelblich gefärbte Lösung erhalten, die bei 25°C lediglich eine Viskosität von 576 mPas besitzt.

### Beispiel 4

241 g einer Mischung aus 1 Mol der Formose gemäß Beispiel 1 von DOS 2 639 084, 1,12 Mol Harnstoff und 0,5 Mol Wasser, die durch einfache Mischung der Komponenten und Entwässerung im Rotationsverdampfer bei 15 Torr und 55°C hergestellt wurde, und die bei 35°C eine Viskosität von 81 000 mPas besitzt, werden durch Zugabe von 204 g (1,48 Mol) Diäthylphosphit in eine völlig klare Lösung überführt, die bei 35°C eine Viskosität von nur 127 mPas besitzt.

### Beispiel 5

_{M}an verfährt wie in Beispiel 4, ersetzt den Harnstoff jedoch durch 1,12 _{M}ol ε-Caprolactam. Die erhaltene Lösung besitzt bei 35°C eine Viskosität von lediglich 27 mPas.

### Beispiel 6

Dieses Beispiel beschreibt die Herstellung eines weiteren Typs von erfindungsgemäßen Mischungen, in denen N-Methylolverbindungen von Thioharnstoff, Harnstoff bzw. ε-Caprolactam gelöst vorliegen.
a) 614 g einer Mischung aus 1,5 Mol Formose des Beispiel 1, 2 Mol Monomethylolthioharnstoff und 2,7 Mol Wasser, die durch einfache Mischung der Komponenten in 50 %iger wäßriger Lösung und Entwässerung im Rotationsverdampfer bei 55°C und 15 Torr erhalten wurde (Viskosität bei 25°C und einem Wassergehalt von 8 %: 2413 mPas) werden mit 690 g (5 Mol) Diäthylphosphit bei Raumtemperatur vermischt. Man erhält ein erfindungsgemäßes Gemisch, das bei 25°C lediglich eine Viskosität von 600 mPas aufweist.
b) Man verfährt wie bei a), ersetzt den Monomethylolthioharnstoff aber durch 270 g ( 3 Mol) an Monomethylolharnstoff. Die Viskosität der Formose-Aminoplastmonomer-Lösung beträgt 72 633 mPas/25°C,nach Modifizierung mit Diäthylphosphit 300 mPas bei 25°C.
c) Man mischt wie bei a) 1,5 Mol Formose mit 2 Mol N-Methylolcaprolactam und C,57 Mol Wasser. Das Gemisch hat bei 25°C eine Viskosität von 17 305 mPas. Durch Abmischen von 687 g dieser Formose-Aminoplastmonomer-Mischung mit 690 g Diäthylphosphit erhält man eine erfindungsgemäße Mischung mit einer Viskosität von 120 mPas bei 25°C.

Die Mischungen a), b) und c) stellen Reaktivlösungen dar, die bei 50 bis 70°C in einem Vakuum von 1 bis 15 Torr nicht nur unter Äthanol-Abspaltung leicht zu Formose-Phosphit-Estern reagieren sondern auch mit dem Aminoplastmonomeren unter Wasserabspaltung zu _{A}midophosphonsäureestern wie beispielsweise 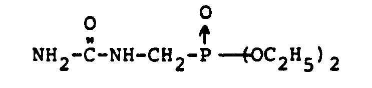 kondensieren.

Werden bei der Herstellung von Lösungen der unter a) bis c) genannten Art Formosen eingesetzt, die Formaldehyd in Halbacetalform gebunden enthalten, so bildet sich aus abgespaltenem Formaldehyd und dem Diäthylphosphit nahezu quantitativ Hydroxymethanphosphonsäurediäthylester, der zu analogen Kondensationsreaktionen befähigt ist wie das Diäthylphosphit.

### Beispiel 7

Man mischt 166 g der in Beispiel 1 beschriebenen Formose mit 132 g (1 Mol) 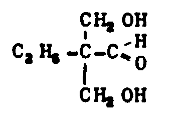 und 298 g Diäthylphosphit zu einer 50 %igen erfindungsgemäßen Mischung. Die erhaltene Lösung hat eine erstaunlich geringe Viskosität von nur 230 mPas bei 25°C.

### Beispiel 8

Dieses Beispiel zeigt, daß selbst nahezu vollständig entwässerte Formosen, mit einem Wassergehalt von ca. 0,7 %, sich in Diäthylphosphit oder Dimethylphosphit zu erfindungsgemäßen Mischungen mit stark reduzierter Viskosität lösen:

Die in Beispiel 1 beschriebene Formose wird in Diäthylphosphit in verschiedenen Konzentrationen bei 50°C gelöst: Man findet folgende Viskositäts-Konzentrationsabhängigkeit:

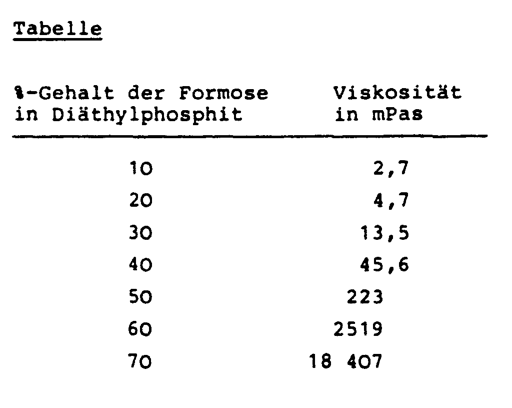

### Beispiel 9 (Verwendungsbeispiel)

Dieses Beispiel zeigt die technisch besonders interessante Verwendungsmöglichkeit der erfindungsgemäßen Gemische zur Herstellung äußerst flammwidriger, offenporiger, stark carbonisierender Polyharnstoff-Polyurethan-Hartschaumstoffe im Kennzahlbereich 45 bis 50, d.h. mit unterschüssigen Mengen an Polyisocyanaten.

a) 88 Gew.-Teile der in Beispiel 6 beschriebenen Mischung b) werden bei 35°C mit 40 _{G}ew.-Teilen eines auf Trimethylolpropan gestarteten Propylenoxid-Äthylenoxid-Mischpoly- äthers der OH-Zahl 28, der als _{El}astifizierungsmittel d-ent, vermischt. Der Polyäther enthält 0,7 Gew.-Teile eines Emulgators der Konstitution 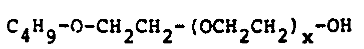 (der Zahlenmittelwert von x beträgt 20).

Der intensiv gerührten Mischung werden 3 Gew.-Teile Wasser, 1,2 Gew.-Teile eines handelsüblichen Silicon-Stabilisators (Stabilisator OS 610 der Bayer AG), 0,2 Gew.-Teile Endoäthylenpiperazin und 0,25 Gew.-Teile Zinn-II-octoat zugefügt und anschließend 184 Gew.-Teile eines Phosgenierungsproduktes eines technischen Anilin-Formaldehyd-Kondensats eingerührt. Das verwendete Polyisocyanat besitzt einen NCO-Gehalt von 29 %. Die Schaumstoffbildung ist nach 6 Minuten und bei sehr gleichmäßiger Steigzeit ohne Schrumpferscheinungen beendet. Man erhält einen offenzelligen Hartschaumstoff mit eingebautem Flammschutzmittel, der ein Raumgewicht von 30 kg/m aufweist.

Geschnittene Hartschaumstoff-Streifen von 2 cm Breite, 1,cm Dicke und 10 cm Länge lassen sich bei Beflammung mit einer Bunsenflamme nicht zünden, die Laufgeschwindigkeit der Flamme ist daher gleich Null. Durch Beflammung des Streifens mit der Bunsenflamme über 30 Sekunden hinaus läßt sich ebenfalls keine Flammenausbreitung erzielen; der Brandvorgang äußert sich lediglich in einer Carbonisierung des Schaumstoffes und in der Abspaltung von wasserreichen Brandgasen.

b) Man verfährt wie unter a) beschrieben, setzt aber 5 Gew.-Teile einer Mischung bestehend aus Formose und N-Methylolcaprolactam (1:1) zu, wodurch die Reaktion zwischen NCO-Gruppen und Wasser stark aktiviert und die Fließfähigkeit des Systems verlängert wird. Man erhält einen Hartschaumstoff mit ebenfalls ausgezeichneter Flammwidrigkeit vom Raumgewicht 26 kg/m³.

c) Setzt man die in Beispiel 6 b) beschriebene erfindungsgemäße Mischung für Imprägnierungsreaktionen oder Matrizenreaktionen bei Polyurethanweichschaumstoffen ein, so werden selbst vor der Modifizierung noch leicht entflammbare Polyurethan-Weichschaumstoffe so flammwidrig, daß sie nach Zündung mit einer Bunsenflamme selbstverlöschen.

## Patentansprüche

1) Verfahren zur Erniedrigung der Viskosität von Formose bzw. Gemischen aus Formose und _{M}ono- und/oder Disacchariden durch Zusatz eines viskositätserniedrigenden Mittels, dadurch gekennzeichnet, daß man als viskositätserniedrigendes Mittel Dialkylphosphite verwendet.

2) Gegenüber Isocyanaten reaktive Gemische, bestehend aus
A) 3 bis 97 Gew.-t, bezogen auf die Sunme der Komponenten A, B und C, an Formose sowie gegebenenfalls Mono-und/oder Disacchariden,
B) 3 bis 97 Gew.-%, bezogen auf die Summe der Komponenten A, B und C, an Dialkylphosphiten sowie gegebenenfalls Trialkylphosphiten und/oder α-Hydroxyalkylphosphonsäureestern und/oder α-Aminoalkylphosphonsäureestern und
C) O bis 10 Gew.-%, bezogen auf die Summe der Komponenten A, B und C, an Wasser.

3) Gemische nach Anspruch 2, dadurch gekennzeichnet, daß sie aus 10 bis 95 Gew.-% der Komponente A, 5 bis 90 Gew.-% der Komponente B und 0,3 bis 6 Gew.-% Wasser bestehen.

4) Gemische nach Anspruch 2, dadurch gekennzeichnet, daß sie aus 30 bis 80 Gew.-% der Komponente A, 15 bis 60 Gew.-% der Komponente B und 0,3 bis 6 Gew.-% Wasser bestehen.

5) Gemische nach Anspruch 2 bis 4, dadurch gekennzeichnet, daß sie aus 1 Mol der Komponente A, 0,2 bis 20 Mol der Komponente B und 0 bis 3 Mol Wasser bestehen.

6) Gemische nach Anspruch 2 bis 4, dadurch gekennzeichnet, daß sie aus 1 Mol der Komponente A, 0,7 bis 5 Mol der Komponente B und O bis 1,5 Mol Wasser bestehen.

7) Gemische nach Anspruch 2 bis 6, dadurch gekennzeichnet, daß sie bis zu 100 Gew.-%, bezogen auf die Summe der Komponenten A, B und C, an zur Aminoplastbildung befähigten Verbindungen bzw. deren N-Methylolderivaten enthalten.

8) Gemische nach Anspruch 7, dadurch gekennzeichnet, daß sie 10 bis 50 Gew.-% des zur Aminoplastbildung befähigten Stoffes enthalten.

9) Verfahren zur Herstellung von gegebenenfalls zellförmigen Polyurethankunststoffen durch Umsetzung von
a) Polyisocyanaten mit
b) Polyhydroxylverbindungen mit einem Molekulargewicht unter 400, gegebenenfalls
c) Polyhydroxylverbindungen mit einem Molekulargewicht zwischen 400 und 10 000 sowie gegebenenfalls weiteren gegenüber Isocyanaten reaktiven Verbindungen, gegebenenfalls in Gegenwart von
d) Treibmitteln, Katalysatoren, Füllstoffen und weiteren an sich bekannten Zusatzstoffen,
dadurch gekennzeichnet, daß als Komponente b) gegebenenfalls durch Umesterungsreaktionen modifizierte Gemische nach Anspruch 2 bis 8 eingesetzt werden.

10. Verfahren zur Herstellung von Photphorigeäureestern von Formose sowie gegebenenfalls Mono- und/oder Disacchariden, dadurch gekennzeichnet, daß man die Gemische nach Anspruch 1 bis 8 unter Entfernung der Alkoholkomponente des Dialkylphosphits umestert.

11. Verfahren nach Anspruch 10, dadurch gekennzeichnet, daß man den Alkohol bei einer Temperatur zwischen 25 und 65°C unter Anlegen eines Vakuums von 0,3 bis 20 Torr entfernt.
